# EUROPEAN PATENT SPECIFICATION

(11) **EP 1 141 101 B1**
(45) Date of publication and mention of the grant of the patent: **04.06.2003**
(21) Application number: 00906213.4
(22) Date of filing: 18.01.2000
(51) Int. Cl.: C08J 9/12, C08J 9/00, C08G 18/63, C08L 75/04

(54) **PROCESS FOR THE PREPARATION OF FLEXIBLE POLYURETHANE FOAMS**
VERFAHREN ZUR HERSTELLUNG FLEXIBLER POLYURETHANSCHAUMSTOFFE
PROCEDE SERVANT A PREPARER DES MOUSSES DE POLYURETHANNE SOUPLES

(30) Priority: 19.01.1999 EP 99200162
(43) Date of publication of application: 10.10.2001
(73) Proprietor: SHELL INTERNATIONALE RESEARCH MAATSCHAPPIJ B.V., 2596 HR Den Haag (NL)
(72) Inventor: MAAS, Wilfridus, Petrus, Maria, B-1348 Ottignies, Louvain-La-Neuve (BE); VANDICHEL, Jean-Claude, Noel, Eliane, London SE1 7NA (GB)
(86) International application number: EP0000399
(87) International publication number: WO00043443

(56) References cited:
- EP-A- 0 495 551
- US-A- 5 605 939
- US-A- 5 668 191

## Description

The present invention relates to a process for the preparation of flexible polyurethane foams, wherein liquid carbon dioxide is used as blowing agent.

Such processes are known in the art and are, for instance, described in WO-A-97/02938; WO-A-96/00644; EP-A-0,645,226 and WO-A-98/30376. These processes have in common that polyurethane foams are produced by bringing together under pressure the reactive foam components including the liquid carbon dioxide and subsequently passing the resulting foaming mixture through a pressure reducing device after which the polyurethane foam is formed. Bringing together the foam components may involve premixing liquid carbon dioxide under pressure with at least one of the other foam components and then mixing the component containing the liquid carbon dioxide with the other reactive foam components under pressure (e.g. WO-A-96/00644 and EP-A-0,645,226). It may also involve bringing together all foam components without premixing and directly passing them through a pressure reducing device (e.g. WO-A-98/30376). The foam components typically include a polyol component, a polyisocyanate component, one or more catalysts, a surfactant and a blowing agent. After the components are mixed pressure is applied to keep the carbon dioxide in the liquid state, i.e. normally the liquid carbon dioxide is dissolved in the other foam components and the pressure applied ensures that no gaseous carbon dioxide is present. Subsequently, the foaming mixture is discharged thereby releasing the pressure so that the liquid carbon dioxide will become gaseous and will expand the foam formed.

According to WO-A-96/00644 foams are produced using carbon dioxide as blowing agent, wherein at least one of the foaming components is mixed with carbon dioxide under pressure to produce a mixture containing carbon dioxide in liquid form, subsequently mixing this mixture with the other reactive foam component to form a foamable reactive mixture and then expanding this reactive mixture by subdividing it into a large number of individual flows at high shear rates. Suitably this is attained by passing the reactive mixture through at least one fine-meshed screen. Finally, the foam product is cured.

Although the foams produced by the methods described above perform satisfactorily in many respects, there is still room for improvement. The present invention particularly aimed at improving the hardness of the foams produced and at improving the mechanical strength and load bearing properties. Furthermore, the present invention aimed at finding a method for producing polyurethane foams having improved processability, e.g. in terms of cell-opening, while using liquid carbon dioxide as blowing agent.

These and other objects have been achieved by using polymer polyols in combination with liquid carbon dioxide.

The use of polymer polyols in combination with liquid carbon dioxide causes an additional problem. Namely, the discharge devices in the apparatuses for applying liquid carbon dioxide contain small openings for discharging the foaming mixture. However, the polymeric particles present in the polymer polyol could readily plug the small openings in the discharge device. Polymer polyols, i.e. polyols with dispersed therein polymeric particles, usually contain small fractions of large polymer particles. As said, these particles could plug the small passages in the discharge device, so that at a certain moment the foaming mixture cannot pass this device properly anymore. It was found that very small amounts of larger polymer particles already cause plugging of the discharge devices. Obviously this is an undesired situation.

However, it has now been found that when using polymer polyols wherein the polymer particles meet strict requirements as to their size may well be used.

Accordingly, the present invention relates to a process for the preparation of flexible polyurethane foams comprising the steps of
(a) bringing together a polyol component, a polyisocyanate component, a blowing agent comprising liquid carbon dioxide, a suitable catalyst and optionally ancillary chemicals at sufficient pressure to maintain the carbon dioxide in a liquid state, and
(b) releasing the pressure and allowing the mixture obtained in step (a) to react into a flexible polyurethane foam,
wherein the polyol component comprises a polymer polyol consisting of at least one polyether polyol having an average nominal functionality of at least 2.5 with dispersed therein from 2 to 50 wt% based on total weight of polymer polyol of polymer particles, whereby the particle size of essentially none of these polymer particles exceeds 50 micron.

In general, a polymer polyol is a dispersion of a solid polymer in a liquid base polyol. Such systems are well known in the art. Examples of such polymer polyol systems and methods for their preparation are disclosed in, for instance, European patent specifications Nos. 0,076,491; 0,343,907 and 0,495,551. Polyurea or polyurethane polymers are also known to be useful as the dispersed polymer in polymer polyols.

The base polyol may be any polyol or blend of polyols known to be useful for forming a stable dispersion of polymer therein. In general such polyether polyol is obtained by reacting one or more alkylene oxides like ethylene oxide and propylene oxide with a suitable initiator compound containing three or more active hydrogens which can react with the alkylene oxide. Suitably, the base polyol is a polyether polyol having a molecular weight in the range of from 250 to 12,000, preferably from 500 to 6,500, more preferably from 2,500 to 6,000; an average nominal functionality (Fn) of at least 2.5, more preferably from 2.5 to 6.0 and most preferably from 2.5 to 4.0; and an ethylene oxide content of from 0 to 50 wt%, preferably 0 to 20 wt%, based on total weight of polyether polyol.

The polymer dispersed in the base polyol, may in principle be any such polymer known to be applicable for this purpose. Thus, suitable polymers include the polymers based on ethylenically unsaturated monomers and particularly polymers of vinyl aromatic hydrocarbons, like styrene, alpha-methyl styrene, methyl styrene and various other alkyl-substituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred polymers, however, are polystyrene and styrene-acrylonitrile (SAN) copolymers. Another suitable class of polymers are the polyurea and polyurethane polymers. Particularly the condensation products of polyhydric alcohol amines and aromatic diisocyanates are very useful in this respect. A very much preferred polymer is the condensation product of triethanol amine and toluene diisocyanate (TDI). The dispersed polymer is preferably present in an amount of from 5 to 40% by weight based on total weight of polymer polyol. In case the polymer is polystyrene or SAN polymer, preferred amounts are between 10 and 35% by weight, whilst in case of polyurea polymers and condensation products of polyhydric alcohol amines and aromatic diisocyanates the preferred amount of polymer is between 5 and 20% by weight.

The polymer particles dispersed in the polyol should have a particle size of not more than 50 micron, i.e. essentially none of the polymer particles should have a particle size above 50 micron. In practice, this means that the polymer polyol should contain less than 5 ppm of polymer particles larger than 50 micron. It was found, namely, that several ppm (i.e. 5 ppm or more) of larger particles are already sufficient to block the discharge devices of the foaming apparatuses. The result is a pressure build up, which may adversely affect foam properties. Furthermore, the runtime is very short in such a case, thus prohibiting commercially viable foam production. Particularly good results in terms of runtime were obtained when using polymer polyols, wherein essentially none of the dispersed polymer particles has a particle size which exceeds 25 micron. Most preferably, the particle size of the polymer particles does not exceed 20 micron.

In order to ensure that the polymer polyols used are essentially free of polymeric particles having a particle size above 50 micron, the polymer polyol is suitably filtered before use in the process according to the present invention. Any filtration technique known in the art for filtering suspensions of small.particles in a liquid medium can be used. Yet another possibility of obtaining polymer polyols which are essentially free of polymer particles having a particle size above 50 micron bis by using a method for preparing polymer polyols, wherein very small polymer particles are formed with a very narrow particle size distribution. Such a method is, for instance, disclosed in EP-A-0,786,480.

The invention will now be illustrated by the following examples without limiting the scope of the present invention to these particular embodiments.

### Example 1

On an experimental slabstock foam unit equipped with a device for introducing liquid carbon dioxide into a foam formulation (a Novaflex liquid CO₂ device ex Hennecke; Novaflex is a trademark), a prefiltered polymer polyol was tested. The prefiltered polymer polyol contained 10.5 wt% polystyrene particles dispersed in a polyether polyol having an OH-value of 46 mg KOH/g, a molecular weight of 3500, an ethylene oxide content of 11 wt% and a nominal average functionality of 3.0, and contained less than 5 ppm filter retentate when passed over a 41 µm filter in a standard filtration.

A formulation containing

| | |
|---|---|
| 100 | pbw Polymer Polyol |
| 55 | pbw TDI-80 |
| 4.5 | pbw water |
| 0.2 | pbw stannous octoate catalyst |
| 0.25 | pbw amine catalyst (NIAX A-1; NIAX is a |
| | trademark) |
| 4.0 | pbw liquid carbon dioxide and |
| 1.7 | pbw Silicone surfactant (Silicone B4900) |

was processed on the slabstock foam unit with liquid CO₂ device and a polyurethane foam was formed.

Measured properties of the foam were:

| | |
|---|---|
| Density | 15.6 kg/m³ |
| Hardness 40 % | 2.9 kPa (DIN 53577) |
| Tensile strength | 92 kPa and |
| Elongation | 110 % (ASTM 3574). |

### Comparative Example 1

On a commercial slabstock foam unit equipped with a similar liquid CO₂ device, the same formulation as used in Example 1 was tested containing the same 10.5 wt% polymer polyol as used in Example 1, except that this time the non-filtered form of the polymer polyol was used. In a standard filtration on a 41 µm filter 23 ppm retentate was found for this polymer polyol.

When processing the formulation over the slabstock foam unit, rapid pressure build up was observed and a large number of particles was found in the discharge part of the liquid CO₂ device, as a result of which the device was blocked.

### Comparative Example 2

On the same unit as in Example 1, the same formulation as in Example 1 was tested, except that it contained a polyether polyol in stead of a polymer polyol. Thus, no polymer particles were present. The polyether polyol used was the same polyol which was used as the base polyol in the polymer polyol of Example 1 (i.e. having an OH-value of 46 mg KOH/g, a molecular weight of 3500, an ethylene oxide content of 11 wt% and a nominal average functionality of 3.0).

When processing this formulation over the foam production unit, no blocking of the discharge part of the liquid CO₂ device was found and a polyurethane foam was formed.

Measured properties of the foam were:

| | |
|---|---|
| Density | 16.1 kg/m³ |
| Hardness 40% | 1.9 kPa (DIN 53577) |
| Tensile strength | 77 kPa and |
| Elongation | 184 % (ASTM 3574). |

Comparing the properties of the foam produced in Comparative Example 2 with those of the foam produced in Example 1 it is clear that the process according to the present invention results in a less elastic foam with improved hardness and mechanical strength. Comparative Example 1 shows that the presence of essentially no polymer particles having a particle size above 50 micron is essential to produce a foam with liquid carbon dioxide as blowing agent.

## Claims

1. Process for the preparation of flexible polyurethane foams comprising the steps of
(a) bringing together a polyol component, a polyisocyanate component, a blowing agent comprising liquid carbon dioxide, a suitable catalyst and optionally ancillary chemicals at sufficient pressure to maintain the carbon dioxide in a liquid state, and
(b) releasing the pressure and allowing the mixture obtained in step (a) to react into a flexible polyurethane foam,
wherein the polyol component comprises a polymer polyol consisting of at least one polyether polyol having an average nominal functionality of at least 2.5 with dispersed therein from 2 to 50 wt% based on total weight of polymer polyol of polymer particles, whereby the particle size of essentially none of these polymer particles exceeds 50 micron.

2. Process according to claim 1, wherein the particle size of essentially none of the polymer particles exceeds 25 micron.

3. Process according to claim 1 or 2, wherein the polymer dispersed in the polyether polyol is polystyrene, styrene-acrylonitrile copolymer, polyurea or polyurethane polymer.

## Patentansprüche

1. Verfahren zur Herstellung eines weichen Polyurethanschaumstoffes, das die folgenden Schritte umfaßt:
(a) Zusammenbringen einer Polyolkomponente, einer Polyisocyanatkomponente, eines flüssiges Kohlendioxid umfassenden Treibmittels, eines geeigneten Katalysators und gegebenenfalls von Hilfschemikalien bei genügendem Druck, um das Kohlendioxid in einem flüssigen Zustand zu halten, und
(b) Ablassen des Drucks und Reagierenlassen des in Stufe (a) erhaltenen Gemisches zu einem weichen Polyurethanschaumstoff,
worin die Polyolkomponente ein Polymerpolyol umfaßt, das aus wenigstens einem Polyetherpolyol mit einer mittleren nominellen Funktionalität von wenigstens 2,5 besteht, worin 2 bis 50 Gew.-%, bezogen auf das Gesamtgewicht des Polymerpolyols. Polymerteilchen dispergiert sind, wobei die Teilchengröße von im wesentlichen keinem dieser Polymerteilchen 50 µm übersteigt.

2. Verfahren nach Anspruch 1, worin die Teilchengröße von im wesentlichen keinem der Polymerteilchen 25 Mikrometer überschreitet.

3. Verfahren nach Anspruch 1 oder 2, worin das im Polyetherpolyol dispergierte Polymer Polystyrol, Styrol-Acrylnitrilcopolymer, Polyharnstoff- oder Polyurethanpolymer ist.

## Revendications

1. Procédé de préparation de mousses de polyuréthanne souples comprenant les étapes suivantes :
(a) la mise en contact d'un composant de polyol, d'un composant de polyisocyanate, d'un composant de soufflage comprenant du dioxyde de carbone liquide, d'un catalyseur approprié et éventuellement de produits chimiques auxiliaires à une pression suffisante pour maintenir le dioxyde de carbone à l'état liquide, et
(b) la libération de la pression et la mise en réaction du mélange obtenu dans l'étape (a) en une mousse de polyuréthanne souple,
dans lequel le composant de polyol comprend un polymère polyol formé d'au moins un polyéther polyol ayant une fonctionnalité nominale moyenne d'au moins 2,5 dans lequel est dispersé de 2 à 50% en poids par rapport au poids total de polymère polyol de particules de polymère, de sorte que la taille de particule de pratiquement aucune de ces particules de polymère n'excède 50 microns.

2. Procédé suivant la revendication 1, dans lequel la taille de particule de pratiquement aucune des particules de polymère n'excède 25 microns.

3. Procédé suivant l'une ou l'autre des revendications 1 et 2, dans lequel le polymère dispersé dans le polyéther polyol est du polystyrène, un copolymère de styrène-acrylonitrile, une polyurée ou un polyuréthanne polymère.
